# EUROPÄISCHE PATENTSCHRIFT

(11) **EP 0 419 994 B1**
(45) Veröffentlichungstag und Bekanntmachung des Hinweises auf die Patenterteilung: **01.06.1994**
(21) Anmeldenummer: 90117871.5
(22) Anmeldetag: 17.09.1990
(51) Int. Cl.: G21C 17/00, G21C 17/02

(54) **Verfahren zur Überwachung der Aktivität eines gasförmigen oder flüssigen Mediums in einem Überwachungsvolumen kerntechnischer Anlagen und Vorrichtung zu seiner Durchführung**
Method for monitoring the activity of a gaseous or liquid means in a control-volume in nuclear plants and device for carrying it out
Méthode de surveillance de l'activité d'un moyen gazeux ou liquide dans un volume de contrôle d'installations nucléaires et dispositif pour son exécution

(30) Priorität: 29.09.1989 DE 3932712
(43) Veröffentlichungstag der Anmeldung: 03.04.1991
(73) Patentinhaber: SIEMENS AKTIENGESELLSCHAFT, 80333 München (DE)
(72) Erfinder: Fettel, Werner, Dipl.-Ing. (FH), D-6053 Obertshausen (DE)

(56) Entgegenhaltungen:
- EP-A- 0 236 791
- US-A- 3 712 850
- US-A- 4 909 982

## Beschreibung

Die Erfindung bezieht sich auf ein Verfahren zur Überwachung der Aktivität eines gasförmigen oder flüssigen Mediums in einem Überwachungsvolumen kerntechnischer Anlagen, insbesondere zur Aktivitätsüberwachung des Volumens der Behälteratmosphäre und gegebenenfalls des Gebäudesumpfwassers im Sicherheitsbehälter eines Kernkraftwerkes.

Die Überwachung der Aktivität eines gasförmigen oder flüssigen Mediums in unzugänglichen Räumen oder Behältern gestaltet sich oft problematisch, insbesondere im Überwachungsvolumen kerntechnischer Anlagen. Nach postulierten Störfällen in Kernkraftwerken, z. B. in Druckwasser- oder Siedewasser-Kernkraftwerken, die eine Freisetzung radioaktiver Stoffe aus dem Reaktorkern in die Sicherheitsbehälteratmosphäre zur Folge haben können, wird durch das Auftreten möglicherweise sehr hoher luftgetragener Aktivitätskonzentrationen im Sicherheitsbehälter die Handhabung und Messung einer Probe zu einem Problem.

Der Erfindung liegt die Aufgabe zugrunde, ein Verfahren zur Überwachung der Aktivität eines gasförmigen oder flüssigen Mediums in einem Überwachungsvolumen kerntechnischer Anlagen der eingangs genannten Art zu schaffen, mit welchem eine präzise und reproduzierbare Aktivitätsüberwachung sowohl unter Normal- als auch unter Störfallbedingungen vorgenommen werden kann.

Aufgabe der Erfindung ist es auch, eine vorteilhafte Vorrichtung zur Durchführung eines solchen Verfahrens zu schaffen.

Durch die EP-A1-0 236 791 ist eine Einrichtung zum Messen der Aktivität von in Wasser gelösten Gasen bekannt. In dieser bekannten Einrichtung werden aus einem konstanten Volumenstrom von Wasser durch einen konstanten Volumenstrom von Trägergas die im Wasser gelösten Gase ausgewaschen. Das die ausgewaschenen Gase enthaltende Trägergas wird dann untersucht. Die bekannte Einrichtung dient zur Überwachung von kontaminiertem Wasser, also z.B. des zur Kühlung eines Reaktorkerns dienenden Wassers. Demgegenüber bezieht sich die vorliegende Erfindung auf die Überwachung der Atmosphäre in einem Überwachungsvolumen kerntechnischer Anlagen, und zwar unmittelbar durch Probennahme gasförmiger Proben oder mittelbar durch Probennahme flüssiger Proben, die mit der zu überwachenden Atmosphäre in Verbindung stehen und deren Kontaminationsgrad deshalb von demjenigen der zu überwachenden Atmosphäre abhängt.

Erfindungsgemäß wird die erstgenannte Aufgabe mit einem Verfahren gemäß Patentanspruch 1 durch die folgenden Merkmale gelöst:
a) von wenigstens einer Transportfluid-Quelle wird Transportfluid in wenigstens einen Transportfluid-Leitungszweig eingespeist, welcher mindestens auf einem Teil seines Länge im Containment des Sicherheitsbehälters verlegt ist, und in einem außerhalb des Sicherheitsbehälters angeordneten Sammelbehälter rückgespeist,
b) das im Transportfluid-Leitungszweig transportierte Transportfluid wird im Überwachungsbereich mittels wenigstens einer Entnahme-Armatur mit einem definierten Probevolumen des zu überwachenden Mediums gemischt, so daß im Falle der jeweiligen Probennahme die Mischung aus dem Probenvolumen des Mediums und dem Transportfluid dem Sammelbehälter zugeführt wird,
c) vom Sammelbehälter wird die Mischung aus dem entnommenen Probevolumen und dem Transportfluid oder eine gasförmige Komponente der Mischung wenigstens einer Meßstrecke zur Ausmessung der Radioaktivität des überwachten Mediums zugeführt.

Vorteilhafte Weiterbildungen des Verfahrens nach der Erfindung sind in den Patentansprüchen 2 bis 8 angegeben. Danach wird als Transportfluid bevorzugt Wasser verwendet. Wasser, das von einem Vorrats- oder Speicherbehälter eingespeist wird, hat dekontaminierende Eigenschaften, d.h., im Normalbetrieb wird das Wasser im Transportfluid-Leitungszweig, der insbesondere als Ringleitung ausgebildet ist, in Umlauf gehalten. Es können nun durch Umschalten der Entnahme-Armaturen aus ihrer Ruhestellung oder ersten Betriebsstellung in eine Dosierstellung oder zweite Betriebsstellung gasförmige oder flüssige Proben aus dem Überwachungsvolumen, also insbesondere aus dem Containment, genommen werden. Diese gasförmigen oder flüssigen Proben werden über den Transportfluid-Leitungszweig in den Vorratsbehälter eingespeist. Hierzu kann von der Sammelbehälteratmosphäre eine gasförmige Probe über eine entsprechende, belüftbare Gasprobenleitung genommen werden. An die Behälteratmosphäre ist außerdem ein Aerosol-Jod-Filter-Zweig, der in einen Abgaskamin mündet, angeschlossen. Mit der Flüssigkeitssäule des Sammelbehälters ist wenigstens eine Leitung zur flüssigen Probennahme verbunden und wenigstens eine weitere bodenseitige Leitung die zu einer Abwasseraufbereitungsanlage führen kann. Die flüssige Probennahme erfolgt über eine Entnahmeleitung und zweckmäßig über kleine dichtend abschließbare Entnahmebüchsen, die zum Rohrposttransport geeignet und so zu einem Meßlabor laufend transportierbar sind.

Gemäß einer Verfahrensvariante ist es auch möglich, daß als Transportfluid Wasserdampf verwendet wird, welcher im genannten Sammelbehälter oder in einem damit verbundenen Kondensator kondensiert wird. Gemäß einer zweiten Verfahrensvariante wird als Transportfluid ein neutrales Trägergas, z.B. Stickstoff, alternativ oder - vorzugsweise - zusätzlich zu einem flüssigen Transportfluid verwendet. Im letztgenannten Falle der Verwendung eines neutralen Trägergases als Transportfluid werden bevorzugt der Transportfluid-Leitungszweig und die Entnahme-Armatur nach einer durchgeführten Probenahme durch Hindurchleiten eines Spülmediums, insbesondere in Form von Wasser, von internen radioaktiven Ablagerungen befreit.

Man kann nun die wenigstens eine Entnahme-Armatur für Entnahme von Proben an unterschiedlichen Stellen des Überwachungsbereiches ferngesteuert längs wenigstens einer Ortskoordinate in unterschiedliche Entnahme-Positionen bewegen, also in vertikaler und/oder horizontaler Richtung. In diesem Falle werden flexible Anschlußleitungen, die das Transportfluid zu oder von der Entnahme-Armatur transportieren, benötigt. Gemäß einer besonders günstigen Ausführungsform werden aber mehrere ortsfest an verschiedenen Stellen des Überwachungsbereiches installierte Entnahme-Armaturen selektiv und mittels Fernsteuerung angesteuert, so daß die jeweilige Probennahme repräsentativ für die Aktivität an der betreffenden Stelle des Überwachungsbereiches ist. Dieses System der fest installierten Entnahme-Armaturen läßt sich in Sonderfällen durch eine oder mehrere bewegliche Entnahme-Armaturen vorteilhaft ergänzen, wenn z.B. die Aktivitätskonzentration längs einer vertikalen oder einer horizontalen Koordinate in feineren Schritten ermittelt werden soll, als es die fest installierten Entnahme-Armaturen ermöglichen. Wie bereits erwähnt, ist es vorteilhaft, wenn ein kontinuierlicher Strom des Transportfluids durch den Transportfluid-Leitungszweig und die Entnahme-Armatur sowohl in der Ruhestellung als auch in der Dosierstellung der Entnahme-Armaturen aufrechterhalten wird. In der Ruhestellung bedeutet dies (kurz nach einer durchgeführten Probennahme) eine Dekontamination, so daß für die nächste Probennahme und Messung die Leitungen und Armaturen gereinigt vorliegen und so das Meßergebnis nicht verfälschen können. Außerdem können dadurch das Dosieren oder die Probennahme im Störfall unverzögert durchgeführt werden, da das gesamte Überwachungs- und Meßsystem ständig in Bereitschaftsstellung ist.

Die mit der Erfindung erzielbaren Vorteile sind - soweit nicht schon erläutert - vor allem in folgendem zu sehen:
Komplizierte Meßbereichsumschaltungen bei der Aktivitäts-Meßstrecke und einer zugehörigen Meßelektronik sind nicht erforderlich. Eine Probennahme an verschiedenen Stellen des Überwachungsvolumens ist möglich. In den langen Rohrleitungen des Transportfluid-Leitungszweiges sind Ablagerungen, die zu merklichen Meßwertverfälschungen führen können, vermieden. Dies ist insbesondere deshalb von Bedeutung, weil die Gefährlichkeit ablagerungsfähiger luftgetragener Feststoffe (Aerosole) und von ablagerungsfähigem luftgetragenem Jod um mehr als drei Zehnerpotenzen höher ist als diejenige von Gasen, insbesondere Edelgasen. Durch das Verfahren nach der Erfindung können die Aktivitätskonzentrationen dieser gefährlicheren Stoffe (Aerosole, Jod) auch dann noch bestimmt werden, wenn deren Konzentration um mehrere Zehnerpotenzen unter derjenigen der Edelgase liegt. Durch den Einbau mehrerer unabhängig voneinander ansteuerbarer Entnahme-Armaturen, sogenannter Probennahme-Köpfe, in den Transportfluid-Leitungszweig wird es möglich, auch bei unterschiedlichen Meßmediumsbedingungen am Probenort ein konstantes kleines Volumen gezielt an einer bestimmten Stelle des Raumes oder Behälters zu entnehmen und in das Transportfluid einzubringen. Wie es anhand der Vorrichtung noch erläutert wird, kann man durch die Frequenz der intermittierenden Probenahme im Störfall die genommene Probe ausreichend verdünnen, d.h., bei hohen Aktivitätskonzentrationen werden entweder Entnahme-Armaturen angewählt, die ein kleineres Probenvolumen aufweisen, oder aber es wird pro Zeiteinheit, z.B. pro Minute, eine kleinere Anzahl von Proben, z.B. statt zwei Proben nur eine, genommen. Der besondere Vorteil eines flüssigen Transportfluids ist der, daß nach einem Störfall in einem Kernkraftwerk die genommene Probe jeweils verdünnt und ablagerungsfrei aus dem Sicherheitsbehälter heraustransportiert werden kann. Die Entgasung des Transportfluids im Sammelbehälter erlaubt die Abtrennung gasförmiger Anteile und ermöglicht so eine genauere Ausmessung der Bestandteile, die nach dem Entgasen im Transportfluid verbleiben. Unter Überwachungsvolumen einer kerntechnischen Anlage wird ein Gebäudevolumen verstanden, welches über Belüftungsleitungen und -ventile sowie über Entlüftungsstrecken (Filterstrecken, ggf. Druckabbaustrecken und diesen nachgeschaltete Entlüftungsleitungen) mit der Außenatmosphäre in Verbindung steht (zur Entlüftungsstrecke gehört z.B. ein Entlüftungskamin). Dieses Überwachungsvolumen ist in einem Störfall ganz oder teilweise nicht mehr begehbar und mit der Außenatmosphäre dann nur über eine gefilterte Druckabbaustrecke verbindbar.

Gegenstand der Erfindung ist auch eine Vorrichtung zur Durchführung des vorstehend erläuterten Verfahrens, insbesondere zur Entnahme schwach- bis hochaktiver Probenvolumina eines gasförmigen oder flüssigen Mediums aus dem Überwachungsvolumen einer kerntechnischen Anlage, vorzugsweise zur Überwachung der Behälteratmosphäre und gegebenenfalls des Gebäudesumpfwassers im Sicherheitsbehälter von Kernkraftwerken, mit den folgenden Merkmalen:
a) wenigstens ein Transportfluid-Vorratsbehälter ist über einen Transportfluid-Leitungszweig und ein Fluidförderorgan mit einem Transportfluid-Sammelbehälter verbunden, wobei der Transportfluid-Leitungszweig auf einem Teil seiner Länge als Entnahmeleitungsabschnitt für das zu überwachende Medium im Containment des Sicherheitsbehälters verlegt ist und der Transportfluid-Sammelbehälter außerhalb des Containments angeordnet ist,
b) in den Entnahmeleitungsabschnitt ist wenigstens eine Entnahme-Armatur für das zu überwachende Medium eingeschaltet, welche wenigstens vier Wege in Gestalt einer Mediumeingangs-, einer Mediumausgangs-, einer Transportfluid-Einspeise- und einer Transportfluid-Rückspeise-Seite und wenigstens ein bewegliches Steuerorgan mit zwei Betriebsstellungen aufweist,
   b1) in einer der II. Betriebsstellung des Steuerorgans entsprechenden Dosierstellung sind die Mediumeingangs- und Mediumausgangs-Seite der Entnahme-Armatur über mindestens einen ersten Durchgang des Steuerorgans miteinander verbindbar, dagegen ist die Verbindung von dem Transportfluid-Vorratsbehälter über diesen ersten Durchgang zum Sammelbehälter unterbrechbar,
   b2) in der I. Betriebsstellung des Steuerorgans (Ruhestellung) ist der Weg von dem Tranportfluid-Vorratsbehälter über den ersten Durchgang und den Transportfluid-Leitungszweig zum Sammelbehälter freigebbar, wobei durch das Volumen des Durchgangs des Steuerorgans das jeweils gewonnene und mit dem Transportfluid mischbare Probevolumen definiert ist,
c) an den Sammelbehälter ist wenigstens eine Meßstrecke angeschlossen, in welcher das eingespeiste Gemisch aus Transportfluid und dem überwachten Medium oder eine gasförmige Komponente der Mischung auf ihren radioaktiven Kontaminationsgrad ausmessbar sind.

Vorteilhafte Weiterbildungen dieser Vorrichtung sind in den Patentansprüchen 10 bis 13 angegeben. Im folgenden werden mehrere Ausführungsbeispiele für ein Verfahren nach der Erfindung und der Vorrichtung zu seiner Durchführung zusammen mit weiteren Einzelheiten und Vorteilen des Erfindungsgegenstandes anhand der Zeichnung näher erläutert. In der Zeichnung zeigt, teils in vereinfachter, schematischer Darstellung unter Fortlassung der für das Verständnis der Erfindung nicht erforderlichen Details:
- FIG 1: eine Vorrichtung nach der Erfindung in einem Schaltbild, die zur Überwachung der Behälteratmosphäre und gegebenenfalls des Gebäudesumpfwassers eines Sicherheitsbehälters für ein Kernkraftwerke dient, wobei der Sicherheitsbehälter schematisch im Ausschnitt dargestellt ist;
- FIG 2: eine Variante zum ersten Ausführungsbeispiel nach FIG 1 im Ausschnitt, wobei zusätzlich zum Vorratsbehälter ein Spülwasserbehälter und eine Trägergas-Speicherbehälteranordnung vorgesehen sind;
- FIG 3: eine erste Ausführung einer Entnahme-Armatur, ausgebildet als Kolbenschieber mit vier Wegen und zwei Durchgängen;
- FIG 4: den Schnitt nach der Schnittebene IV-IV aus FIG 3;
- FIG 5: den Schnitt nach der Schnittebene V-V aus FIG 3.

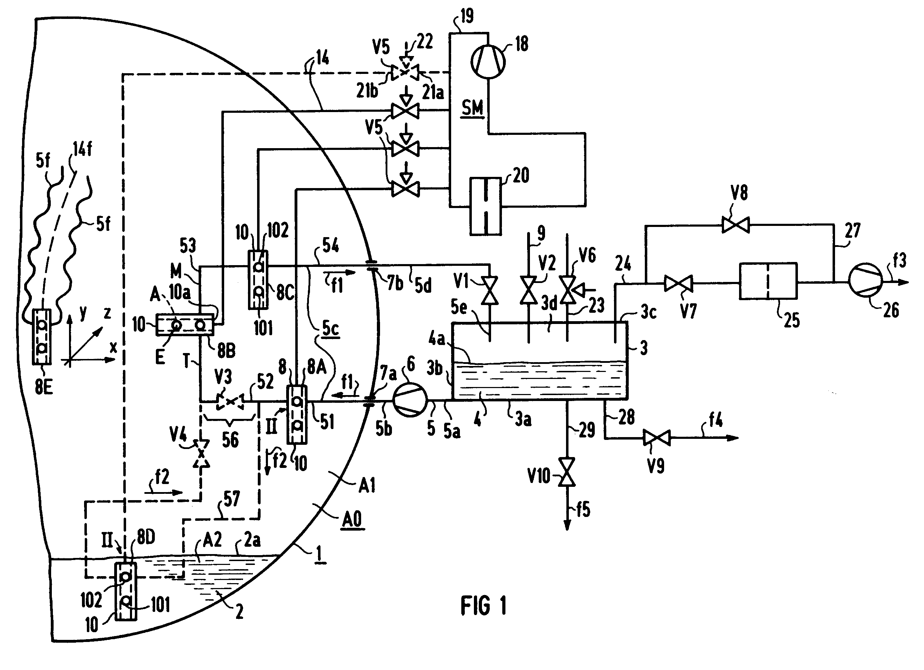

Die in Figur 1 dargestellte Vorrichtung dient zur Entnahme schwach- bis hochaktiver Probenvolumina eines gasförmigen oder flüssigen Mediums aus dem Überwachungsvolumen A, umfassend 1. und 2. Überwachungsvolumina A1 und A2, einer kerntechnischen Anlage, die im dargestellten Ausführungsbeispiel durch den Sicherheitsbehälter 1 eines Druckwasser-Kernkraftwerkes gebildet ist. Dieser kugelförmige Sicherheitsbehälter 1 ist zur Vereinfachung nur durch eine Kreislinie angedeutet; er ist normalerweise zweischalig mit einem inneren kugelförmigen gasdichten Stahlbehälter und einer diesen Stahlbehälter mit Abstand umhüllenden Betonhülle. Im Inneren des Sicherheitsbehälters 1 ist bodenseitig ein Gebäudesumpf 2 angedeutet, mit einem Wasserspiegel bei 2a. Im dargestellten Fall setzt sich das generell mit A bezeichnete Überwachungsvolumen (oder auch: Containment) zusammen aus der Sicherheitsbehälteratmosphäre A1 (= erstes Überwachungsvolumen) und dem Gebäudesumpfwasser 2 als zweitem Überwachungsvolumen A2; besonders wichtig und notwendig ist das Überwachungsvolumen A1; das zweite Überwachungsvolumen A2 vervollkommnet das Überwachungssystem, kann aber bei einem einfachen Überwachungssystem weggelassen werden. Es sei noch erwähnt, daß der Gebäudesumpf 2 normalerweise (durch nicht dargestellte Pumpen und entsprechende Leitungen) trockengehalten wird und sich hier nennenswerte Wassermengen nur im Notkühlfall ansammeln.

Außerhalb des Containments A0 ist in einem nicht näher dargestellten Reaktorgebäude ein Vorratsbehälter 3, z.B. in Gestalt eines zylindrischen Tanks aus nichtrostendem Stahl, angeordnet, der in seinem Inneren bis zum Spiegel 4a mit Transportfluid 4 angefüllt ist. An diesem Vorratsbehälter ist im unteren an den Boden 3a angrenzenden Bereich der Mantelwand ein Transportfluid-Leitungszweig 5 angeschlossen (im folgenden abgekürzt als Leitungszweig 5 bezeichnet), und zwar folgen in Strömungsrichtung bzw. Förderrichtung des Transportfluids gesehen ein erstes Leitungsstück 5a, eine Pumpe 6, ein zweites Leitungsstück 5b (noch außerhalb des Sicherheitsbehälters 1), eine erste gasdichte Leitungsführung 7a durch die Wand des Sicherheitsbehälters 1, dann im Inneren des Sicherheitsbehälters 1 ein Entnahmeleitungsabschnitt 5c, welcher von der ersten Durchführung 7 durch das Containment A0 mit vier Unterabschnitten 51 bis 54 und zwischen diesen vier Unterabschnitten eingeschalteten Entnahme-Armaturen 8 bis hin zu einer zweiten Durchführungsstelle 7b in der Sicherheitsbehälterwand verlegt ist. Von dieser Durchführungsstelle 7b führt dann (außerhalb des Containments A0) der Leitungsabschnitt 5d über ein erstes Ventil V1 und den Leitungsabschnitt 5e durch die Deckwand 3c des Sammelbehälters 3 in dessen Gasraum 3d, der sich oberhalb des Flüssigkeitsspiegels 4a befindet.

Man erkennt, daß der Sammelbehälter 3 zugleich ein Vorratsbehälter des Transportfluids 4, in diesem Falle Wasser, ist, welches in aufbereiteter Form dem Sammelbehälter 3 über eine Transportfluid-Zuspeiseleitung 9 und ein (zweites) Ventil V2 von einem nicht dargestellten Transportfluid-Vorratsbehälter zugeführt wird. Dieses Frischwasser ist dekontaminiert und chemisch gereinigt (aufbereitet), es handelt sich dabei insbesondere um Deionat. Der Leitungszweig 5 fungiert als Ringleitung, durch welche mittels der Pumpe 6 (allgemein: Fluidförderorgan) das Transportfluid im Kreislauf gefördert wird.

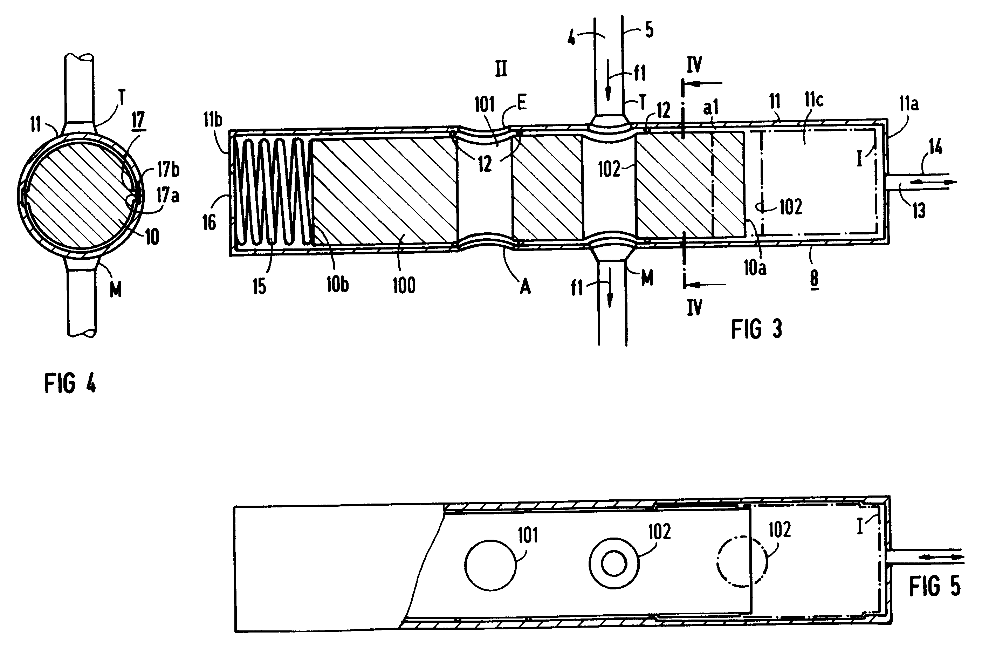

Im Containment A0 sind im dargestellten Fall beispielsweise drei Entnahme-Armaturen 8, die im einzelnen mit 8A, 8B, 8C bezeichnet sind, installiert. Jede dieser Entnahme-Armaturen 8 weist wenigstens vier Wege E, A, T, M auf, und zwar in Gestalt einer Mediumseingangsseite E, einer Mediumsausgangsseite A, einer Transportfluid-Einspeiseseite T und einer Transportfluid-Rückspeiseseite M. Dies wird anhand der Figuren 3 bis 5 weiter unten noch näher erläutert. Ferner weist jede Entnahme-Armatur 8 wenigstens ein bewegliches Steuerorgan 10 mit zwei Betriebsstellungen auf. Dieses bewegliche Steuerorgan 10 ist in Figur 1 schematisch als Kolbenschieber mit zwei Durchgängen 101 und 102 dargestellt, wobei zur besseren Erkennbarkeit die Durchgänge 101, 102 in die Papierebene hineingedreht sind (vgl. die korrekte Darstellung in FIG 3 bis 5). Alle drei Entnahme-Armaturen 8 bzw. 8A bis 8C sind in der II. Betriebsstellung des Steuerorgans 10 (Dosierstellung) dargestellt, in welcher der Weg vom Vorratsbehälter 3 über den Leitungszweig 5 (einschließlich Pumpe 6) und jeweils über den zweiten Durchgang 102 zurück zum Sammelbehälter 3 freigegeben ist. Der erste Durchgang 101 ist der Behälteratmosphäre ausgesetzt, wird mit Gebäudeluft beaufschlagt, deshalb "Dosierstellung".

Mit gestrichelten Linien ist die zusätzliche Möglichkeit der Anordnung wenigstens einer weiteren Entnahme-Armatur 8D innerhalb eines zweiten Überwachungsbereiches A2 angedeutet, hier: der Gebäudesumpf 2. Wenn diese zusätzliche Überwachung fest installiert ist, dann könnte ein Leitungsabschnitt 56 entfallen, und in der dargestellten Dosierstellung der Entnahme-Armaturen 8 würde dann das Transportfluid, welches im Kreislauf gemäß Pfeilen f1 durch den Leitungszweig 5 gefördert wird, noch einen Umweg gemäß den gestrichelten Pfeilen f2 durch den Leitungsabschnitt 57 machen.

Es wäre jedoch auch möglich, diese zusätzliche Überwachungsschleife zu- und abschaltbar auszuführen. Vergleiche die gestrichelt dargestellten Ventile V3 und V4 im Leitungsabschnitt 56 bzw. 57.

In Figur 3 bis 5 sind die als Kolbenschieber ausgeführten Entnahme-Armaturen 8 näher dargestellt, und zwar in Betriebsstellung II (Dosierstellung). Die im folgenden abgekürzt als Armatur bezeichnete Entnahme-Armatur 8 weist in der dargestellten Ausführungsform als Kolbenschieber nach Figuren 3 bis 5 ein zylindrisches Gehäuse 11 auf, in welchem das Steuerorgan 10 in Form eines Kolbens 100 längsverschieblich und federbelastet hin und herbewegbar zwischen den beiden Betriebsstellungen I und II gelagert ist. Zur Abdichtung des Ringspaltes al zwischen Außenumfang des Kolbens 100 und Innenumfang des zylindrischen Gehäuses 11 sind Kolbenringe 12 am Außenumfang des Kolbens 10 vorgesehen, welche lediglich schematisch angedeutet sind (in Wirklichkeit sind sie in Ringnuten des Kolbens 100 gelagert). Zwei Kolbenringe sind beidseits des zweiten Durchgangs 101 angeordnet und dichten in der dargestellten Dosierstellung die Behälteratmosphäre, welche Zugang zum ersten Durchgang 101 hat, zum Innenraum des Zylinders 11, insbesondere zum zweiten Durchgang 102 ab, welch letzterer mit dem Transportfluid-Leitungszweig 5 verbunden ist. Ein weiterer Kolbenring 12 dichtet diesen zweiten Durchgang 102 zum Innenraum des Zylinders 11 und insbesondere zum Steuermedium 13 ab, welches über eine entsprechende Steuerleitung 14, die an die Gehäusestirnwand 11a angeschlossen ist, dem Zylinderinnenraum 11c zugeführt wird. Am anderen Ende des Kolbens 100 (Gehäusestirnwand 11b) ist eine Druckfeder 15 gelagert, die zwischen der Gehäusestirnwand 11b und der Kolbenseite 10b eingefügt ist. Über die zentrische Öffnung 16 hat die Behälteratmosphäre Zugang zur Kolbenseite 10b, wogegen die andere Kolbenseite 10a vom Steuermedium 13 beaufschlagt wird. Als Steuermedium dient insbesondere Druckluft, deren Druck über dem Druck im Containment liegt, so daß, wie in Figur 3 dargestellt, der Kolben 100 entgegen der Kraft der Druckfeder 15 (die hier als Spiralfeder ausgebildet ist) in der Betriebsstellung II gehalten wird. Die Behälteratmosphäre kann so durch den ersten Durchgang 101 des Kolbens 100 strömen. Der erste und der zweite Durchgang 101, 102 sind als zylindrische, auf einem Durchmesser liegende Bohrungen ausgebildet. Wird nun der Druck des Steuermediums 13 abgesenkt, so verschiebt die Druckfeder 15 mit Unterstützung des Containment-Druckes den Kolben 10 in die gestrichelt angedeutete Betriebsstellung I (Ruhestellung), in welcher der erste Durchgang 101 dort zu liegen kommt, wo in Betriebsstellung II sich der zweite Durchgang 102 befindet, d.h., das innerhalb des ersten Durchganges 101 genommene Probenvolumen wird zwischen Eingangsseite T und Rückspeiseseite M des Transportfluids 4 geschoben, und diese Probe wird nun mit dem Transportfluid 4, dessen Strömungsrichtung durch die Pfeile f1 angedeutet ist, zum Sammelbehälter 3 transportiert. Der zweite Durchgang 102 wird in dieser I. Betriebsstellung, wie es gestrichelt in Figuren 3 und 5 angedeutet ist, "totgelegt".

Aus Figur 4 ist noch eine Kolbenführung 17 zu erkennen, welche aus Längsrippen 17a am Außenumfang des Kolbens 10 und entsprechenden Längsnuten 17b am Innenumfang des Gehäuses 11 besteht.

Die dargestellte Ausführung der Armatur 8 mit zwei Durchgängen 101, 102 hat den Vorteil, daß in der dargestellten II. Betriebsstellung ein kontinuierlicher Fluß des Transportmediums aufrechterhalten wird, weil ja der zweite Durchgang 102 die Einspeiseseite T mit der Rückspeiseseite M des Transportfluids 4 verbindet. Dies hat, wie erwähnt, den Vorteil, daß - nachdem die genommene Probe vom Transportfluid zum Sammelbehälter 3 transportiert worden ist - der weitere Fluß des Transportmediums zur Beseitigung eventueller Ablagerungen und damit zur Spülung und Dekontaminierung dient, um so den Leitungszweig 5 einschließlich Pumpe 6 und die Armaturen 8 auf die nächste Probennahme vorzübereiten.

Zurückkommend auf Figur 1: Dort ist schematisch eine pneumatische Steuermedium-Versorgungseinrichtung SM dargestellt, mit einer Pumpe 18, einer Drossel 20 und verbindenden (Druckluft-) Leitungen 19. Die Pumpe 18 fördert das Steuermedium im Kreislauf von ihrer Druckseite durch die Leitungen 19 über die Drossel 20 zurück zu ihrer Saugseite. Von einem Abschnitt der Leitungen 19 zweigen mehrere Steuerleitungen 14 über je ein Steuerventil V5 ab. Die Steuerventile sind als hand- oder fernbetätigbare Dreiwege-Druckluftventile ausgeführt, mit drei Wegen 21a, 21b und 22 und zwei Schaltstellungen, wobei der Weg 21a der Druckluft-Eingang, der Weg 21b der Druckluft-Ausgang und der Weg 22 der Entlüftungsweg ist. Sind die Steuerventile V5, mit ihren im Leitungszug liegenden beiden Wegen 21a, 21b, wie dargestellt, durchgeschaltet, dann gelangt das Steuermedium über die Steuerleitungen 14 zur Seite 10a der Kolben 100 und hält diese in der II. Betriebsstellung (Dosierstellung). In der Sperrstellung der Steuerventile V5 wird durch einen nicht näher dargestellten Drehschieber eine Verbindung der Wege 21b - 22 hergestellt, d.h. die Steuerleitungen 14 werden entlüftet, und der Weg 21a zur Leitung 19 (Druckluftquelle) wird abgesperrt.

Die aus Figuren 3 bis 5 im Detail ersichtliche II. Betriebsstellung (Dosierstellung) ist, wie erwähnt, auch bei den in Figur 1 dargestellten Armaturen 8 gegeben. In dieser Stellung sind die Mediumeingangsseite und die Mediumausgangsseite E, A der jeweiligen Armatur über den ersten Durchgang 101 miteinander verbunden. Die Verbindung zwischen dem Transportfluid-Vorratsbehälter (zugleich Sammelbehälter 3) und über den Leitungszweig 5 zurück zum Sammelbehälter 3 wird über den zweiten Durchgang 102 aufrechterhalten. In der I. Betriebsstellung des Steuerorgans 10 (Ruhestellung) dagegen ist der Weg vom Transportfluid-Vorratsbehälter (zugleich Sammelbehälter 3) über den ersten Durchgang 101 und den Leitungszweig 5 zurück zum Sammelbehälter 3 freigegeben, wobei durch das Volumen des Durchganges 101 des Steuerorgans 10 das jeweils gewonnene Probenvolumen definiert ist. Zur Auswertung dieser genommenen Proben, welche mit Transportfluid (insbesondere Wasser) vermischt bei 5e in den Sammelbehälter 3 eingespeist werden, sind verschiedene Meßeinrichtungen (siehe Figur 1) vorgesehen. Hierzu sei zunächst erwähnt, daß der Sammelbehälter 3 mit einer (nicht dargestellten) Füllstandsanzeige versehen ist. Der Sammelbehälter 3 ist so dimensioniert, daß der in ihm gespeicherte Vorrat an Transportfluid größer ist als der in dem Leitungszweig 5 (Ringleitung) umlaufende Teil. Der Sammelbehälter 3 dient damit auch der gleichmäßigen Verteilung einer entnommenen Probe im gesamten Transportvolumen, welches vom Leitungszweig 5 einschließlich Pumpe 6 und dem Sammelbehälter 3 gebildet wird. In der bevorzugten Ausführung mit Wasser als Transportfluid können die im Wasser leicht löslichen Bestandteile der Probe von den flüchtigen durch Entgasen getrennt werden. Wird gemäß einer anderen Ausführungsform und Verfahrensvariante ein gasförmiges Transportfluid, z.B. Stickstoff, verwendet, so können die staubförmigen Bestandteile (Aerosole) durch Filtern abgetrennt werden. Eine Verwendung von gasförmigem Transportfluid ist jedoch nur dann möglich und sinnvoll, wenn die zu analysierenden Bestandteile auch bei einem Transport in der Gasphase sich nicht zu stark in dem Leitungszweig 5 ablagern und somit die Meßwerte verfälschen.

Zurück zum in Figur 1 dargestellten Ausführungsbeispiel: Dort ist eine weitere Meßleitung 23 zur gasförmigen Probennahme dargestellt mit einem belüftbaren Dreiwege-Absperrventil V6, welche mit ihrem unteren Leitungsende durch die Deckwand 3c des Sammelbehälters 3 in dessen Gasraum 3d mündet. Eine weitere Meßleitung 24 für gasförmige Proben führt über ein Absperrventil V7, ein Aerosol-Jod-Filter 25 und eine Meßgaspumpe 26 zu einem nicht dargestellten Abgaskamin oder einer Abgasanlage (Strömungspfeil f3), wobei die Reihenschaltung aus Ventil V7 und Filter 25 noch durch einen mittels Ventil V8 öffen- und schließbaren Evakuierungs-Bypass 27 überbrückt ist. Ferner ist bodenseitig an den Behälter 3 eine Meßleitung 28 zur Entnahme flüssiger Proben über ein weiteres Absperrventil V9 angeschlossen, wobei die Flüssigprobe gemäß Pfeil f4 zum Befüllen von Probennahme-Flaschen (nicht dargestellt) dienen kann. Schließlich ist bodenseitig an den Sammelbehälter 3 noch eine Entleerungsleitung 29 angeschlossen, welche über ein Absperrventil V10 zu einer (nicht dargestellten) Füllstation für Abwassertanks oder Abwasseraufbereitungsanlage führt. Im in Figur 1 dargestellten Fall der Verwendung von Wasser als Transportfluid werden nach dem Befüllen des Systems (Sammelbehälter und Leitungen) bis zu einem bestimmten Pegel im Sammelbehälter über die Bypassleitung 27 die restlichen Gase aus dem Sammelbehälter herausgezogen. Während der Dauer der Probennahme wird das Ventil V8 zur Evakuierungspumpe 26 geschlossen und das System im evakuierten Zustand belassen. Nach der Probennahme, d.h., die Armaturen sind von ihrer Dosierstellung II in die Ruhestellung I verlagert worden, wird der Sammelbehälter 3 belüftet und aus dem über die Füllstandsanzeige bekannten Volumen eine Probe zur Bestimmung der gasförmigen Anteile über Leitung 23 entnommen. Aus dem flüssigen Transportfluid bzw. dem Wasser wird ebenfalls eine Probe über die Leitung 28 zur Bestimmung der löslichen Anteile entnommen (zu diesem Zweck wird Ventil V9 kurzzeitig geöffnet). Das Aerosol-Jod-Filter 25 kann hierbei als reines Filter fungieren, was also der kontinuierlichen Entlüftung des Sammelbehälters 3 dient; es kann jedoch auch als Meßstrecke ausgebildet sein, wobei dann zusätzlich zu der an die Probennahmeleitung 23 angeschlossenen Meßstrecke für gasförmige Proben in diesem Filter 25 Aerosol- und Jodkonzentration ausgemessen werden. Zu diesem Zweck kann vorzugsweise nach Entnahme der flüssigen Proben über Leitung 28 der Sammelbehälter 3 erneut evakuiert und eventuell, z.B. mit Stickstoff, gespült werden, so daß dann über die Filterstrecke 25 der luftgetragene Aerosol- und Jodanteil herausgefiltert und bestimmt werden kann.

Soll nach einer vorausgegangenen hohen Konzentration der zu analysierenden aktivitätsbehafteten Stoffe in der Umgebung der als Probennahme-Köpfe dienenden Armaturen 8 auch ein starker Abfall der Konzentration noch gemessen werden können, so könnte im Falle solcher Stoffe, die auch nach Entgasung noch im Transportfluid verbleiben (bei Wasser als Transportfluid also aerosolförmige Stoffe), diese Vorbelastung an sich die weiteren Messungen erschweren. Bis zu einem gewissen Grad kann dies dadurch kompensiert werden, daß die Anzahl der Proben entsprechend erhöht wird. Ist dies nicht ausreichend, so kann das Transportfluid aus dem Sammelbehälter entleert, das System gespült und neu mit Transportfluid gefüllt werden. In diesem Zusammenhang können wenigstens zwei Sammelbehälter 3 in redundanter Anordnung vorteilhaft sein, wobei dann der eine jeweils in Funktion ist und der andere gespült werden kann.

Die Vorrichtung nach Figur 1 kann auch zur Aktivitätskontrolle während des Normalbetriebs des Kernkraftwerks dienen, wobei in bestimmten Intervallen, z.B. einmal pro Stunde, mittels der Armaturen 8 Proben genommen werden. Es wird sich dann innerhalb der Meßstrecken, welche den Meßleitungen 23, 24, 28 nachgeschaltet sind, ein bestimmter Normalpegel der Aktivitätskonzentration einstellen. Im Störfall, also auch im postulierten Fall des Kernschmelzens, wenn innerhalb der Behälteratmosphäre höhere Aktivitätskonzentrationen möglich sind, wird die Anzahl der Probennahmen pro Zeiteinheit zweckmäßig vergrößert. Generell läßt sich sagen, daß mittels der Steuerventile V5 oder mittels anderer geeigneter, z.B. unmittelbar auf die Steuerorgane 10 wirkender motorischer Antriebe, durch Veränderung der Frequenz der Umschaltung von Betriebsstellung I (Ruhestellung) in Betriebsstellung II (Dosierstellung) und umgekehrt die Anzahl der Probennahmen pro Zeiteinheit in Anpassung an den Kontaminationsgrad des überwachten Mediums, also der Behälteratmosphäre oder des Sumpfwassers 2, verändert werden kann. Durch entsprechend höhere Mengenströme an frischem Transportfluid über die Leitung 9, wobei über Leitung 29 entsprechend mehr Abwasser abgeleitet wird, kann der Kontaminationsgrad in dem Transportfluid 4 unterhalb oberer Grenzwerte gehalten werden, so daß die Meßgeräte nicht überlastet werden. Das heißt, es tritt eine größere Verdünnung mit Reinwasser auf. Eine andere Möglichkeit wurde schon erwähnt: weniger Proben pro Zeiteinheit zu nehmen oder Armaturen mit kleinerem Probenvolumen für solche Fälle vorzusehen. Es ist auch möglich, eine oder mehrere der dargestellten Armaturen 8 (die dargestellte Anzahl von drei bis 4 ist nur als Beispiel zu nehmen; in Wirklichkeit können es noch mehr sein) ortsbeweglich auszuführen und hierzu die an die betreffende ortsbeweglich gelagerte Armatur herangeführten Transportfluid- und Steuerleitungen 5f, 14f flexibel zu gestalten, so daß es möglich ist, in Höhenrichtung und/oder in Horizontalrichtung eine bestimmte Volumeneinheit innerhalb des Containments A0 schichtweise zu überprüfen. Auf diese Weise könnte z.B. die Verteilung von Wasserstoff im Containment genauer festgestellt werden. Diese Möglichkeit ist bei der gesondert dargestellten Armatur 8E dadurch angedeutet, daß ein Koordinatenkreuz mit den Achsen x, y, z neben der Armatur eingezeichnet ist. Ferner sind die Transportfluid-Leitungsabschnitte 5f und die Steuerleitung 14f angedeutet. Diese Armatur könnte also z.B. mit ihren Leitungsabschnitten zwischen die beiden Armaturen 8B und 8C eingefügt werden, wobei ein separates Steuerventil V5 (nicht dargestellt) vorzusehen wäre.

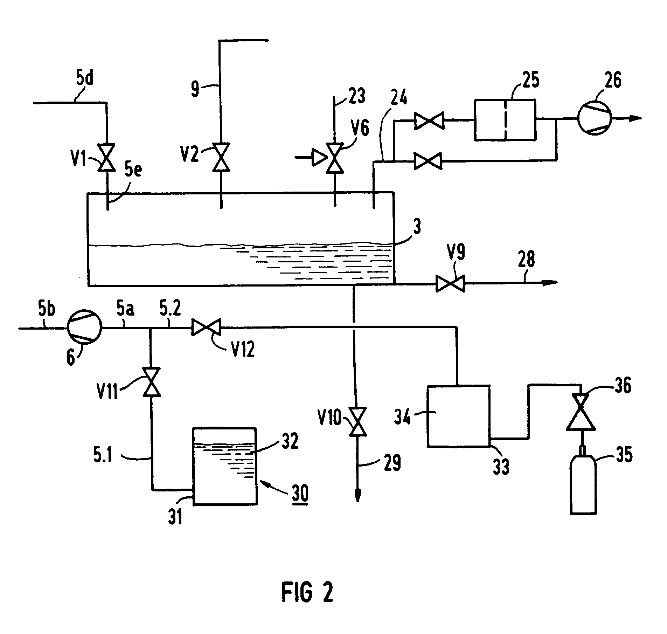

In Figur 2 ist ein Ausführungsbeispiel als Ausschnitt zu Figur 1 dargestellt, bei welchem der Sammelbehälter 3 nicht zugleich Vorratsbehälter so wie im Beispiel nach Figur 1 ist, sondern eine gesonderte Transportfluid-Quelle 30 vorgesehen ist. Diese weist einen Vorratsbehälter 31 für flüssiges Transportfluid, insbesondere Wasser 32, auf und einen Vorratsbehälter 33, in welchem sich gasförmiges Transportfluid 34, insbesondere Stickstoff, befindet. Dieser Vorratsbehälter 33 wird von einer Gasvorratsflasche 35 über ein Druckminderventil 36 versorgt. Vom Vorratsbehälter 31 führt eine Fluidleitung 5.1 mit Absperrventil V11 und vom Vorratsbehälter 34 eine Fluidleitung 5.2 mit Absperrventil V12 zum gemeinsamen Leitungsabschnitt 5a, welcher wieder zur Saugseite der Pumpe 6 führt. Im übrigen ist die Schaltung so, wie in Figur 1 dargestellt. Man kann nun mit der Transportfluid-Quelle 30 so arbeiten, daß das im Vorratsbehälter 31 befindliche Transportfluid jeweils als frisches flüssiges Transportfluid, insbesondere Wasser, in den Leitungszweig 5 eingespeist wird und dann nach Probennahme mittels der Armaturen die genommenen Proben aus der Behälteratmosphäre oder dem Gebäudesumpf in den Sammelbehälter 3 transportiert werden (Einspeiseleitungs-Leitungsabschnitt 5e). Es ist aber auch möglich, umzuschalten auf einen Betrieb mit gasförmigem Trägerfluid, indem das Ventil V11 geschlossen und das Ventil V12 geöffnet wird. In diesem Falls könnten nur die Meßstrecken Verwendung finden, die den Meßleitungen 23 und 24 nachgeschaltet sind. Nach der Probennahme könnte wieder umgeschaltet, d.h. Ventil V12 geschlossen und Ventil V11 geöffnet werden, so daß in diesem Falle das Frischwasser 32 als Spülfluid Verwendung findet. Mit der Vorrichtung nach Figur 2 könnte also wahlweise ein Transportfluid in flüssiger oder gasförmiger Form verwendet werden, wobei im letztgenannten Fall zweckmäßigerweise nach der jeweiligen Probennahme eine Spülung mit einem Spülfluid erfolgt. Erwähnt wurden bisher Wasser und Stickstoff als Transportfluid; es wäre auch möglich, als Transportfluid oder aber auch als Spülfluid Wasserdampf zu verwenden, welcher dann im Sammelbehälter 3 oder in einem damit verbundenen (nicht dargestellten) Kondensator kondensiert wird. Wenn, so wie in Figur 2 dargestellt, der Vorratsbehälter 31 für das Transportfluid 32 nicht baulich mit dem Sammelbehälter 3 vereinigt ist, so empfiehlt es sich wegen kürzerer Leitungen den Transportfluid-Vorratsbehälter außerhalb des Containments in der Nähe des Sammelbehälters 3 anzuordnen.

Aus der vorstehenden Beschreibung und unter Bezugnahme auf Figuren 1 bis 3 wird deutlich, daß durch die Erfindung ein Verfahren zur Überwachung der Aktivität eines gasförmigen oder flüssigen Mediums in einem Überwachungsvolumen A0, A1, A2 kerntechnischer Anlagen verwirklicht wird, insbesondere ein Verfahren zur Aktivitätsüberwachung der Beflälteratmosphäre und gegebenenfalls des Gebäudesumpfwassers 2 im Sicherheitsbehälter 1 eines Kernkraftwerkes. Dabei wird das Verfahren durch die folgenden Schritte charakterisiert:
a) von wenigstens einer Transportfluid-Quelle 3 oder 30 wird Transportfluid 4 in wenigstens einen Transportfluid-Leitungszweig 5 eingespeist, welcher mindestens auf einem Teil 5c seiner Länge im Containment A0 des Sicherheitsbehälters 1 verlegt ist, und in einen außerhalb des Sicherheitsbehälters 1 angeordneten Sammelbehälter 3 rückgespeist;
b) das im Transportfluid-Leitungszweig 5 transportierte Transportfluid 4 wird im Überwachungsvolumen A0 mittels wenigstens einer Entnahme-Armatur 8 mit einem definierten Probenvolumen des zu überwachenden Mediums gemischt (durch Verlagerung des Durchgangs 101 aus seiner Dosierstellung II in die Ruhestellung I, so daß das genommene Probenvolumen des Durchgangs 101 zwischen den Wegen T und M zu liegen kommt), so daß im Falle der jeweiligen Probennahme die Mischung aus dem Probenvolumen des überwachten Mediums und dem Transportfluid 4 dem Sammelbehälter 3 zugeführt wird;
c) vom Sammelbehälter 3 wird die Mischung aus dem entnommenen Probevolumen und dem Transportfluid 4 oder eine gasförmige Komponente der Mischung wenigstens einer Meßstrecke 25 zur Ausmessung der Radioaktivität oder des Kontaminationsgrades des überwachten Mediums zugeführt.

## Patentansprüche

1. Verfahren zur Überwachung der Aktivität eines gasförmigen oder flüssigen Mediums in einem Überwachungsvolumen (A0, A1, A2) kerntechnischer Anlagen, insbesondere zur Aktivitätsüberwachung des Volumens (A1) der Behälteratmosphäre und gegebenenfalls des Volumens (A2) des Gebäudesumpfwassers im Sicherheitsbehälter (1) eines Kernkraftwerkes, mit den folgenden Merkmalen:
a) von wenigstens einer Transportfluid-Quelle (3; 30) wird Transportfluid (4) in wenigstens einen Transportfluid-Leitungszweig (5) eingespeist, welcher mindestens auf einem Teil (53) seiner Länge im Containment des Sicherheitsbehälters (1) verlegt ist, und in einen außerhalb des Sicherheitsbehälters (1) angeordneten Sammelbehälter (3) rückgespeist,
b) das im Transportfluid-Leitungszweig (5) transportierte Transportfluid (4) wird im Überwachungsvolumen (A0, A1, A2) mittels wenigstens einer Entnahme-Armatur (8) mit einem definierten Probevolumen des zu überwachenden Mediums gemischt, so daß im Falle der jeweiligen Probennahme die Mischung aus dem Probevolumen des Mediums und dem Transportfluid (4) dem Sammelbehälter (3) zugeführt wird,
c) von Sammelbehälter (3) wird die Mischung aus dem entnommenen Probevolumen und dem Transportfluid (4) oder eine gasförmige Komponente der Mischung wenigstens einer Meßstrecke (25) zur Ausmessung der Radioaktivität des überwachten Mediums zugeführt.

2. Verfahren nach Anspruch 1, mit dem Merkmal, daß als Transportfluid (4) Wasser verwendet wird.

3. Verfahren nach Anspruch 1, mit dem Merkmal, daß als Transportfluid (4) Wasserdampf verwendet wird, welcher im Sammelbehälter (3) oder in einem damit verbundenen Kondensator kondensiert wird.

4. Verfahren nach Anspruch 1, mit dem Merkmal, daß als Tranportfluid (4) ein neutrales Trägergas (34), z.B. Stickstoff, verwendet wird.

5. Verfahren nach Anspruch 4,
**dadurch gekennzeichnet,** daß bei Verwendung eines neutralen Trägergases als Transportfluid (4) der Transportfluid-Leitungszweig (5) und die Entnahme-Armaturen (8) nach einer durchgeführten Probennahme durch Hindurchleiten eines Spülmediums (32), insbesondere in Form von Wasser, von internen radioaktiven Ablagerungen befreit werden.

6. Verfahren nach einem der Ansprüche 1 bis 5,
**dadurch gekennzeichnet,** daß wenigstens eine Entnahme-Armatur (8E) zur Entnahme von Proben an unterschiedlichen Stellen des Überwachungsvolumens (A0, A1, A2) ferngesteuert längs wenigstens einer Ortskoordinate (x, y, z) in unterschiedliche Entnahme-Positionen bewegt wird.

7. Verfahren nach einem der Ansprüche 1 bis 5,
**dadurch gekennzeichnet,** daß mehrere ortsfest an verschiedenen Stellen des Überwachungsvolumens (A0, A1, A2) installierte Entnahme-Armaturen (8A - 8D) selektiv und mittels Fernsteuerung angesteuert werden, so daß die jeweilige Probennahme repräsentativ für die Aktivität an der betreffenden Stelle des Überwachungsvolumens (A0, A1, A2) ist.

8. Verfahren nach einem der Ansprüche 1 bis 7,
**dadurch gekennzeichnet,** daß ein kontinuierlicher Strom des Transportfluids (4) durch den Transportfluid-Leitungszweig (5) und die Entnahme-Armatur (8) sowohl in der Ruhestellung der Entnahme-Armatur (8) als auch in ihrer Dosierstellung aufrechterhalten wird.

9. Vorrichtung zur Durchführung des Verfahrens nach einem der Ansprüche 1 bis 8, insbesondere zur Entnahme schwach- bis hochaktiver Probenvolumina eines gasförmigen oder flüssigen Mediums aus dem Überwachungsvolumen (A0, A1, A2) einer kerntechnischen Anlage, vorzugsweise zur Überwachung der Behälteratmosphäre und gegebenenfalls des Gebäudesumpfwassers (2) im Sicherheitsbehälter (1) von Kernkraftwerken, mit den folgenden Merkmalen:
a) wenigstens ein Transportfluid-Vorratsbehälter (3, 30) ist über einen Transportfluid-Leitungszweig (5) und ein Fluidförderorgan (6) mit einem Transportfluid-Sammelbehälter (3) verbunden, wobei der Transportfluid-Leitungszweig (5) auf einem Teil seiner Länge als Entnahmeleitungsabschnitt (5c) für das zu überwachende Medium im Containment des Sicherheitsbehälters (1) verlegt ist und der Transportfluid-Sammelbehälter (3) außerhalb des Containments angeordnet ist,
b) in den Entnahmeleitungsabschnitt (5c) ist wenigstens eine Entnahme-Armatur (8) für das zu überwachende Medium eingeschaltet, welche wenigstens vier Wege in Gestalt einer Mediumeingangs- (E), einer Mediumsausgangs- (A), einer Transportfluid- Einspeise- (T) und einer Transportfluid-Rückspeiseseite (M) und wenigstens ein bewegliches Steuerorgan (10) mit zwei Betriebsstellungen (I, II) aufweist,
b1) in einer der II. Betriebsstellung des Steuerorgans entsprechenden Dosierstellung sind die Mediumeingangs- und Mediumausgangs-Seite (E, A) der Entnahme-Armatur (8) über mindestens einen ersten Durchgang (101) des Steuerorgans (10) miteinander verbindbar, dagegen ist die Verbindung von dem Transportfluid-Vorratsbehälter (3, 30) über diesen ersten Durchgang (101) zum Sammelbehälter (3) unterbrechbar,
b2) in der I. Betriebsstellung des Steuerorgans (Ruhestellung) ist der Weg von dem Tranportfluid-Vorratsbehälter (3, 30) über den ersten Durchgang (101) und den Transportfluid-Leitungszweig (5) zum Sammelbehälter (3) freigebbar, wobei durch das Volumen des Durchgangs (101) des Steuerorgans (10) das jeweils gewonnene und mit dem Transportfluid mischbare Probevolumen definiert ist,
c) an den Sammelbehälter (3) ist wenigstens eine Meßstrecke (25) angeschlossen, in welcher das eingespeiste Gemisch aus Transportfluid (4) und dem überwachten Medium oder eine gasförmige Komponente der Mischung auf ihren radioaktiven Kontaminationsgrad ausmessbar sind.

10. Vorrichtung nach Anspruch 9,
**dadurch gekennzeichnet,** daß die Entnahme- Armatur (8) ein Kolbenschieber mit wenigstens vier Wegen (E, A, T, M) und das Steuerorgan (10) ein Kolben mit einem ersten und einem zweiten Durchgang (101, 102) ist, wobei der erste Durchgang (101) in der der Ruhestellung entsprechenden I. Betriebsstellung und der zweite Durchgang (102) in der der Dosierstellung entsprechenden II. Betriebsstellung die Transportfluid-Einspeiseseite (T) und die Transportfluid- Rückspeiseseite (M) miteinander verbinden und der erste Durchgang (101) in der II. Betriebsstellung die Mediumeingangsseite (E) mit der Mediumausgangsseite (A) verbindet.

11. Entnahmevorrichtung nach einem der Ansprüche 9 oder 10, mit einem motorischen Antrieb für das Steuerorgan mit dem Merkmal, daß durch Veränderung der Frequenz der Umschaltung von Betriebsstellung I in Betriebsstellung II und umgekehrt die Anzahl der Probennahmen pro Zeiteinheit in Anpassung an den Kontaminationsgrad des überwachten Mediums veränderbar ist.

12. Entnahmevorrichtung nach einem der Ansprüche 9 bis 11, **dadurch gekennzeichnet,** daß ein Transportfluid-Vorratsbehälter (30) außerhalb des Containments in der Nähe des Sammelbehälters (3) angeordnet ist.

13. Entnahmevorrichtung nach einem der Ansprüche 9 bis 12, **dadurch gekennzeichnet,** daß der Transportfluid-Vorratsbehälter mit dem Sammelbehälter (3) baulich vereinigt ist.

## Claims

1. Method for monitoring the activity of a gaseous or liquid medium in a monitoring volume (A0, A1, A2) of nuclear installations, in particular for the activity monitoring of the volume (A1) of the container atmosphere and perhaps of the volume (A2) of the building bog-water in the safety container (1) of a nuclear power station, having the following features:
a) from at least one transport-fluid source (3; 30) transport fluid (4) is fed into at least one transport-fluid line branch (5), which is installed at least on a section (53) of its length in the containment of the safety container (1), and is fed back into a collecting container (3) arranged outside the safety container (1),
b) the transport fluid (4) transported in the transport-fluid line branch (5) is mixed in the monitoring volume (A0, A1, A2) by means of at least one extraction fitting (8) with a defined sample volume of the medium to be monitored, so that in the case of the respective sampling the mixture from the sample volume of the medium and the transport fluid (4) is supplied to the collecting container (3),
c) from the collecting container (3) the mixture from the extracted sample volume and the transport fluid (4) or a gaseous component of the mixture is supplied to at least one measuring distance (25) for the measurement of the radioactivity of the monitored medium.

2. Method according to claim 1, having the feature that water is used as transport fluid (4).

3. Method according to claim 1, having the feature that water vapour is used as transport fluid (4), the water vapour being condensed in the collecting container (3) or in a condenser connected thereto.

4. Method according to claim 1, having the feature that a neutral carrier gas (34), for example nitrogen, is used as transport fluid (4).

5. Method according to claim 4,
characterized in that with the use of a neutral carrier gas as transport fluid (4) the transport-fluid line branch (5) and the extraction fittings (8) after an executed sampling are freed of internal radioactive deposits by the passing-through of a rinsing medium (32), in particular in the form of water.

6. Method according to one of claims 1 to 5,
characterized in that at least one extraction fitting (8E) for the extraction of samples at different points of the monitoring volume (A0, A1, A2) is moved by remote control along at least one space coordinate (x, y, z) into different extraction positions.

7. Method according to one of claims 1 to 5,
characterized in that several extraction fittings (8A - 8D) installed in a fixed manner at different points of the monitoring volume (A0, A1, A2) are controlled selectively and by means of remote control, so that the respective sampling is representative for the activity at the relevant point of the monitoring volume (A0, A1, A2).

8. Method according to one of claims 1 to 7,
characterized in that a continuous flow of the transport fluid (4) through the transport-fluid line branch (5) and the extraction fitting (8) is maintained both in the rest position of the extraction fitting (8) and in its dosing position.

9. Device for carrying out the method according to one of claims 1 to 8, in particular for the extraction of weakly to highly active sample volumes of a gaseous or liquid medium from the monitoring volume (A0, A1, A2) of a nuclear installation, preferably for monitoring the container atmosphere and perhaps the building bog-water (2) in the safety container (1) of nuclear power stations, having the following features:
a) at least one transport-fluid supply container (3, 30) is connected by way of a transport-fluid line branch (5) and a fluid conveying agent (6) to a transport-fluid collecting container (3), with the transport-fluid line branch (5) being installed on a section of its length as extraction line section (5c) for the medium to be monitored in the containment of the safety container (1) and with the transport-fluid collecting container (3) being arranged outside the containment,
b) there is connected into the extraction line section (5c) at least one extraction fitting (8) for the medium to be monitored, which fitting has at least four paths in the form of a medium input side (E), a medium output side (A), a transport-fluid feed side (T) and a transport fluid feedback side (M) and at least one moving control part (10) with two operating positions (I, II),
b1) in a dosing position corresponding to operating position II of the control part, the medium input side and medium output side (E, A) of the extraction fitting (8) can be connected to one another by way of at least a first passage (101) of the control part (10), while the connection of the transport-fluid supply container (3, 30) can be interrupted by way of this first passage (101) to the collecting container (3),
b2) in operating position I of the control part (rest position) the path from the transport-fluid supply container (3, 30) can be freed by way of the first passage (101) and the transport-fluid line branch (5) to the collecting container (3), with the respectively obtained sample volume, which can be mixed with the transport fluid, being defined by the volume of the passage (101) of the control part (10),
c) to the collecting container (3) there is attached at least one measuring distance (25), in which the fed mixture of transport fluid (4) and the monitored medium or a gaseous component of the mixture can be measured for their degree of radioactive contamination.

10. Device according to claim 9,
characterized in that the extraction fitting (8) is a piston valve with at least four paths (E, A, T, M) and the control part (10) is a piston with a first and a second passage (101, 102), with the first passage (101) in operating position I corresponding to the rest position and the second passage (102) in operating position II corresponding to the dosing position connecting the transport-fluid feed side (T) and the transport-fluid feedback side (M) to one another and with the first passage (101) in operating position II connecting the medium input side (E) to the medium output side (A).

11. Extraction device according to one of claims 9 or 10, with a motor drive for the control part, having the feature that by changing the frequency of the conversion from operating position I into operating position II and vice versa the number of samples per time unit can be varied in conformity with the degree of contamination of the monitored medium.

12. Extraction device according to one of claims 9 to 11, characterized in that a transport-fluid supply container (30) is arranged outside the containment in the vicinity of the collecting container (3).

13. Extraction device according to one of claims 9 to 12, characterized in that the transport-fluid supply container is structurally joined to the collecting container (3).

## Revendications

1. Procédé de surveillance de l'activité d'un fluide gazeux ou liquide dans un volume (A0, A1, A2) à surveiller d'installations de génie nucléaire, notamment destiné à la surveillance du volume (A1) de l'atmosphère de l'enceinte et le cas échéant du volume (A2) de l'eau de la piscine de l'enceinte (1) de confinement d'une centrale nucléaire ayant les caractéristiques suivantes :
a) du fluide de transport (4) est envoyé d'au moins une source (3; 30) de fluide de transport à au moins un conduit de dérivation (5) de fluide de transport, qui est posé au moins sur une partie (53) de sa longueur dans la partie confinée de l'enceinte (1) de confinement, et est renvoyé dans une cuve (3) collectrice prévue à l'extérieur de l'enceinte (1) de confinement,
b) le fluide de transport (4) transporté dans le conduit de dérivation (5) du fluide de transport est mélangé dans le volume (A0, A1, A2) de surveillance au moyen d'au moins un robinet (8) de prélèvement à un volume échantillon défini du fluide à surveiller, de manière à envoyer dans le cas de la prise d'échantillon le mélange constitué du volume d'échantillon du fluide et du fluide de transport (4) à la cuve (3) collectrice,
c) de la cuve (3) collectrice le mélange constitué du volume d'échantillon prélevé et du fluide de transport (4) ou un constituant gazeux du mélange est envoyé au moins à une section de mesure (25) destinée à mesurer la radioactivité du fluide à surveiller.

2. Procédé suivant la revendication 1, qui consiste à utiliser de l'eau comme fluide de transport (4).

3. Procédé suivant la revendication 1, qui consiste à utiliser comme fluide de transport (4) de la vapeur d'eau qui est condensée dans la cuve (3) collectrice ou dans un condenseur qui communique avec celle-ci.

4. Procédé suivant la revendication 1, qui consiste à utiliser comme fluide de transport (4) un gaz porteur (34) neutre, par exemple de l'azote.

5. Procédé suivant la revendication 4,
caractérisé en ce que, lorsque l'on utilise un gaz porteur neutre comme fluide de transport (4), le conduit de dérivation (5) du fluide de transport et les robinets (8) de prélèvement sont débarrassés, après avoir effectué une prise d'échantillon, de dépôts radioactifs internes en y faisant passer un fluide (32) de rinçage, notamment sous forme d'eau.

6. Procédé suivant l'un des revendications 1 à 5,
caractérisé en ce qu'au moins un robinet (8E) de prélèvement, destiné à prélever des échantillons en des points différents du volume (A0, A1, A2) à surveiller, est déplacé de manière télécommandée le long d'au moins une coordonnée (x, y, z) dans l'espace pour venir en des positions de prélèvement différentes.

7. Procédé suivant l'une des revendications 1 à 5,
caractérisé en ce que plusieurs robinets (8A à 8D) de prélèvement, montés à poste fixe en des points différents du volume (A0, A1, A2) à surveiller, sont commandés sélectivement et au moyen d'une télécommande de manière que la prise d'échantillon soit représentative de l'activité des points concernés du volume (A0, A1, A2) à surveiller.

8. Procédé suivant l'une des revendications 1 à 7,
caractérisé en ce qu'il consiste à maintenir un courant continu du fluide de transport (4) dans le conduit de dérivation (5) pour le fluide de transport et dans le robinet (8) de prélèvement, tant dans la position de repos du robinet (8) de prélèvement que dans sa position de prélèvement dosé.

9. Dispositif pour la mise en oeuvre du procédé suivant l'une des revendications 1 à 8, notamment destiné à prélever des volumes d'échantillons faiblement actifs à très actifs d'un fluide gazeux ou liquide de volume (A0, A1, A2) à surveiller d'une installation de génie nucléaire, de préférence destiné à surveiller l'atmosphère de l'enceinte et le cas échéant de l'eau (2) de piscine de l'enceinte (1) de confinement de centrales nucléaires ayant les caractéristiques suivantes :
a) au moins un réservoir (3, 30) pour du fluide de transport communique par un conduit de dérivation (5) pour du fluide de transport et par un organe (6) de transport de fluide avec une cuve (3) collectrice du fluide de transport, le conduit de dérivation (5) pour le fluide de transport étant posé sur une partie de sa longueur en tant que tronçon (5c) de conduit de prélèvement du fluide à surveiller dans la partie confinée de l'enceinte (1) de confinement et la cuve (3) collectrice du fluide de transport étant prévue à l'extérieur de la partie confinée,
b) dans le tronçon (5c) de conduit de prélèvement est monté au moins un robinet (8) de prélèvement du fluide à surveiller, qui comporte au moins quatre voies sous la forme d'un côté (E) d'entrée du fluide, d'un côté (A) de sortie du fluide, d'un côté (T) d'alimentation en fluide de transport et d'un côté (M) de retour du fluide de transport, et au moins un organe (10) mobile de commande ayant deux positions (I, II) de fonctionnement,
b1) dans une position de dosage correspondant à la position (II) de fonctionnement de l'organe de commande, les côtés (E, A) d'entrée du fluide et de sortie du fluide du robinet (8) de prélèvement communiquent entre eux par au moins un premier passage (101) de l'organe (10) de commande, tandis que la liaison du réservoir (3, 30) du fluide de transport à la cuve (3) collectrice par ce premier passage (101) peut être interrompue,
b2) dans la première position (I) de fonctionnement de l'organe de commande (position de repos), le chemin du réservoir (3, 30) du fluide de transport à la cuve (3) collectrice en passant par le premier passage (101) et par le conduit de dérivation (5) du fluide de transport peut être dégagé, le volume d'échantillon récupéré et pouvant être mélangé au fluide de transport étant défini par le volume du passage (101) de l'organe (10) de commande,
c) à la cuve (3) collectrice est raccordée au moins une section (25) de mesure dans laquelle on peut mesurer le degré de contamination radioactive du mélange de fluide de transport (4) et du fluide à surveiller ou d'un constituant gazeux du mélange.

10. Dispositif suivant la revendication 9,
caractérisé en ce que le robinet (8) de prélèvement est un tiroir à pistons ayant au moins quatre voies (E, A, T, M) et l'organe (10) de commande est un piston ayant un premier et un deuxième passage (101, 102), le premier passage (101) en la première position (I) de fonctionnement correspondant à la position de repos et le deuxième passage (102) en la deuxième position (II) de fonctionnement correspondant à la position de dosage, mettant le côté (T) d'alimentation en fluide de transport et le côté (M) de retour du fluide de transport en communication, et le premier passage (101) dans la deuxième position de fonctionnement, mettant le côté (E) d'entrée du fluide en communication avec le côté (A) de sortie du fluide.

11. Dispositif de prélèvement suivant l'une des revendications 9 ou 10, ayant un dispositif d'entraînement à moteur de l'organe de commande et dans lequel, en modifiant la fréquence de passage de la position de fonctionnement I à la position de fonctionnement II et inversement, on peut modifier le nombre des prises d'échantillon par unité de temps en l'adaptant au degré de contamination du fluide à surveiller.

12. Dispositif de prélèvement suivant l'une des revendications 9 à 11 caractérisé en ce qu'un réservoir (30) de fluide de transport est prévu à l'extérieur de la partie confinée à proximité de la cuve (3) collectrice.

13. Dispositif de prélèvement suivant l'une des revendications 9 à 12 caractérisé en ce que le réservoir de fluide de transport constitue une seule unité de construction avec la cuve (3) collectrice.
